# EUROPÄISCHE PATENTSCHRIFT

(11) **EP 3 298 254 B1**
(45) Veröffentlichungstag und Bekanntmachung des Hinweises auf die Patenterteilung: **17.04.2019**
(21) Anmeldenummer: 16721179.6
(22) Anmeldetag: 10.05.2016
(51) Int. Cl.: F01N 13/00, F02D 41/14, G01N 15/02

(54) **ABGASANLAGE MIT EINEM GASSENSOR, INSBESONDERE MIT EINEM PARTIKELSENSOR**
EXHAUST GAS SYSTEM WITH GAS SENSOR, IN PARTICULAR WITH A PARTICULATE MATTER SENSOR
SYSTÈME D'ÉCHAPPEMENT AVEC CAPTEUR DE GAZ, EN PARTICULIER AVEC UN CAPTEUR DE MATIÈRES PARTICULAIRES

(30) Priorität: 21.05.2015 DE 102015209262
(43) Veröffentlichungstag der Anmeldung: 28.03.2018
(73) Patentinhaber: Bayerische Motoren Werke Aktiengesellschaft, 80809 München (DE)
(72) Erfinder: BUMBERGER, Gerwin, 4400 St. Ulrich (AT); HOFER, Gerhard, 4464 Kleinreifling (AT)
(86) Internationale Anmeldenummer: PCT/EP2016/060364
(87) Internationale Veröffentlichungsnummer: WO 2016/184713

(56) Entgegenhaltungen:
- WO-A1-2004/109270
- WO-A1-2012/162685
- DE-A1-102011 083 339
- US-A1- 2003 188 568
- US-A1- 2011 232 268
- US-A1- 2012 085 146

## Beschreibung

Die vorliegende Erfindung betrifft eine Abgasanlage gemäß dem Oberbegriff des Patentanspruches 1.

Um die Rußpartikelkonzentration im Abgas von Fahrzeugen mit Verbrennungsmotoren erfassen zu können, werden Partikelsensoren verwendet, welche in einem Leitungselement (Abgasrohr) einer Abgasanlage angeordnet sind.

Abgassysteme mit Gassensoren sind beispielsweise aus den Druckschriften WO 2004/109270 A1, WO 2012/162685 A1, US 2003/188568 A1 und US 2011/232268 A1 bekannt.

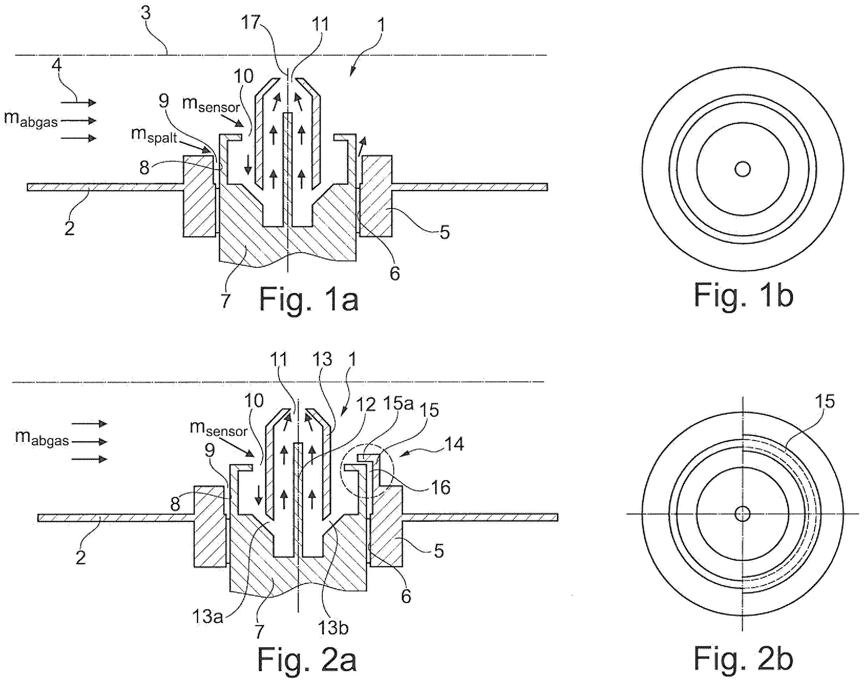

BMW-intern wurden die Strömungsverhältnisse an einem in einem Abgasrohr einer Abgasanlage angeordneten Partikelsensor untersucht. Die untersuchte Sensoranordnung ist schematisch in den Figuren 1a, 1b gezeigt.

Fig. 1a zeigt einen Gassensor bzw. Partikelsensor, der in das Innere eines Abgasrohrs 2, welches eine Mittellängsachse 3 aufweist, hinein ragt. In dem Abgasrohr 2 strömt in einer Strömungsrichtung 4 ein Abgasvolumenstrom m_{Abgas}. In der Wandung des Abgasrohrs 2 ist ein Flansch 5 angeordnet. Der Flansch 5 weist eine mit einem Innengewinde 6 versehene Durchgangsöffnung auf. Der Gassensor bzw. Partikelsensor 1 weist ein Gehäuse 7 auf, welches einen mit einem Außengewinde versehenen Gehäusegewindeabschnitt 8 aufweist, der in die Durchgangsöffnung bzw. in das Innengewinde 6 des Flanschs 5 eingeschraubt ist.

Wie aus Fig. 1a ersichtlich ist, ist zwischen einer radialen Außenseite eines vorderen Abschnitts des Gehäusegewindeabschnitts 8 und einem in das Innere des Abgasrohrs 2 ragenden Innenumfangsabschnitt der Durchgangsöffnung, welche in dem Flansch 5 vorgesehen ist, ein Ringspalt 9 vorgesehen.

Ein Teilvolumenstrom (Spaltstrom) m_{Spalt} des Abgasvolumenstroms m_{Abgas} kann in den Ringspalt 9 eintreten und umströmt das Gehäuse 7 bzw. den Gewindegehäuseabschnitt 8 des Partikelsensors 1. Aufgrund des Ringspalts 9 wird der Partikelsensor relativ stark umströmt, was zu einem Abfall des Druckgradienten zwischen einem Abgaseingang 10 und einem Abgasausgang 11 des Partikelsensors 1 führt. Über den Abgaseingang 10 strömt ein Teilvolumenstrom m_{Sensor} in den Partikelsensor 1 ein und über den Ausgang 11 strömt Abgas aus dem Partikelsensor 1 zurück in das Abgasrohr.

Nur bei einem hinreichend hohem Druckunterschied zwischen dem Eingang 10 und dem Ausgang 11 kommt es zu einer guten Durchströmung des Partikelsensors, was Voraussetzung für gute Messergebnisse ist. Sinkt dieses "Spülgefälle", so fließt ein geringerer Massenstrom mit einer geringeren lokalen Geschwindigkeit durch den Partikelsensor, wodurch weniger Abgas und Partikel in den Sensor gelangen, was sich ungünstig auf die Funktionalität des Sensors auswirkt.

Genau an dieser Stelle setzt die vorliegende Erfindung an.

Aufgabe der Erfindung ist es, eine Abgasanlage mit darin angeordnetem Gassensor, insbesondere mit darin angeordnetem Partikelsensor, zu schaffen, der hinsichtlich der Abgasströmungsverhältnisse so optimiert ist, dass sich möglichst gute Messergebnisse erzielen lassen. Insbesondere soll die das Spülgefälle beeinträchtigende Umströmung des Partikelsensors möglichst gering gehalten werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Abgasanlage mit einem in einer Strömungsrichtung von Abgas durchströmten Abgasrohr, welches eine Rohrwandung aufweist. In der Rohrwandung ist ein Flansch angeordnet, der eine mit einem Innengewinde versehene Durchgangsöffnung aufweist. In die Durchgangsöffnung ist ein Gassensor eingeschraubt. Bei dem Gassensor kann es sich insbesondere um einen Rußpartikelsensor handeln, der z.B. dazu vorgesehen ist, die Konzentration von in dem Abgas enthaltenen Rußpartikeln zu sensieren. Der Gassensor weist einen mit einem Außengewinde versehenen Gehäusegewindeabschnitt auf, der in die Durchgangsöffnung eingeschraubt ist.

Zwischen einer radialen Außenseite eines vorderen Abschnitts des Gehäusegewindeabschnitts und einem in das Innere des Abgasrohrs ragenden Innenumfangsabschnitt der Durchgangsöffnung des Flansches ist ein (fertigungstechnisch notwendiger) Ringspalt vorgesehen.

Der Kern der Erfindung besteht darin, dass der Flansch ein "Strömungsleitelement" aufweist, welches sich über einen stromabwärtigen Teilumfang des Gehäusegewindeabschnitts erstreckt und welches dazu vorgesehen ist, einen Abgasstrom in dem Ringspalt zu begrenzen oder weitgehend zu verhindern.

Das Strömungsleitelement kann ähnlich wie ein "halbes Schutzblech eines Fahrrads" oder wie eine "halbe Hülse" ausgebildet sein. Zweck des Strömungsleitelements ist es, ein "Hindernis" für die Umströmung des Partikelsensors" zu schaffen. Durch das Strömungsleitelement wird die Umströmung des Partikelsensors verringert und somit das Spülgefälle zwischen einem Abgaseingang und einem Abgasausgang des Partikelsensors vergrößert. Aufgrund des entsprechend größeren Druckgradienten fließt ein größerer Abgasmassenstrom durch den Partikelsensor, wodurch sich dessen Messqualität verbessert.

Die Erfindung ist konstruktiv sehr einfach und kostengünstig umsetzbar.

Nach einer Weiterbildung der Erfindung besteht zwischen dem Strömungsleitelement und dem stromabwärtigen Teilumfang des Gehäusegewindeabschnitts ein radialer Spalt.

Es wurde bereits erwähnt, dass sich das Strömungsleitelement über einen Teilumfang des Gehäusegewindeabschnitts erstreckt. Der Teilumfang bzw. Umfangsbereich kann z.B. zwischen 150° und 210° des Gesamtumfangs liegen oder zwischen 160° und 200° oder zwischen 170° und 190°. Vorzugsweise erstreckt sich das Strömungsleitelement über einen Umfangsbereich von im Wesentlichen oder genau 180° des Gehäusegewindeabschnitts.

Nach einer Weiterbildung der Erfindung weist das Strömungsleitelement im Bereich seines stirnseitigen Endes, d.h. im Bereich seines dem Inneren des Abgasrohrs zugewandten Endes, einen radial nach innen zu einer Mittellängsachse des Gassensors bzw. Partikelsensors hin abstehenden Abschnitt auf, welcher einen Teilumfang der Stirnseite des Gehäusegewindeabschnitts des Gassensors bzw. Partikelsensors zumindest ein Stück weit überdeckt.

Zwischen dem radial nach innen abstehenden Abschnitt des Strömungsleitelements und der Stirnseite des Gehäusegewindeabschnitts kann - in Richtung einer Mittellängsachse des Gassensors bzw. Partikelsensors betrachtet - ein Abstand bzw. ein kleiner Spalt bestehen.

Der Flansch, in dessen Durchgangsöffnung der Gassensor bzw. Partikelsensor eingeschraubt ist, kann in die Wandung des Abgasrohrs eingeschweißt oder in anderer Weise fluiddicht mit dem Abgasrohr verbunden sein.

Nach einer Weiterbildung der Erfindung steht ein Teilabschnitt des Gehäusegewindeabschnitts des Gassensors bzw. Partikelsensors über eine dem Inneren des Abgasrohrs zugewandte Stirnseite des Flansches zumindest ein Stück weit vor.

Der Gassensor bzw. Partikelsensor kann einen hülsenartigen Kopf aufweisen. Der hülsenartige Kopf wiederum weist eine Mittellängsachse auf und steht über das Strömungsleitelement vor in Richtung des Inneren des Abgasrohrs.

Der Abgaseinlass des Gassensors kann durch einen zwischen dem Gehäusegewindeabschnitt und dem hülsenartigen Kopf bestehenden Einströmringspalt bzw. Einströmspalt gebildet sein. Über diesen Einströmspalt kann Abgas in das Gehäuse des Gassensors einströmen.

Der hülsenartige Kopf des Gassensors weist - in seiner Umfangsrichtung betrachtet - mindestens einen Durchgang auf, über den Abgas, welches in das Gehäuse des Gassensors eingetreten ist, weiter in das Innere des hülsenartigen Kopfes strömen kann.

Nach einer Weiterbildung der Erfindung weist der Gassensor ein Sensorelement auf, das mittig in dem hülsenartigen Kopf angeordnet ist bzw. das in den hülsenartigen Kopf ragt. In den hülsenartigen Kopf eintretendes Abgas strömt an dem Sensorelement entlang zu einer stirnseitigen Öffnung des hülsenartigen Kopfes. Die stirnseitige Öffnung bildet einen Abgasausgang des Gassensors, über den Abgas zurück in das Abgasrohr strömt.

Im Folgenden wird die Erfindung im Zusammenhang mit der Zeichnung näher erläutert. Es zeigen:
- Fig. 1a, 1b: eine Abgasanlage mit einem Gassensor, wie er bei BMW-intern untersucht wurde und optimiert werden soll;
- Fig. 2a, 2b: eine Abgasanlage mit einem Gassensor gemäß der Erfindung;
- Fig. 3: einen erfindungsgemäßen Flansch mit einem Strömungsleitelement.

Die in den Figuren 2a, 2b dargestellte Anordnung ist weitgehend identisch mit der oben bereits im Zusammenhang mit den Figuren 1a, 1b gezeigten Anordnung.

In das Abgasrohr 2 ist ein Flansch 5, welcher eine mit einem Innengewinde 6 versehene Durchgangsöffnung aufweist, eingeschweißt. In die Durchgangsöffnung 6 ist ein Rußpartikelsensor 1 eingeschraubt.

Der Rußpartikelsensor 1 weist ein Gehäuse 7 auf, welches einen Gewindegehäuseabschnitt 8 aufweist. Der Gewindegehäuseabschnitt 8 ist durch einen Außenumfang des Gehäuses 7 gebildet, an dem ein Außengewinde vorgesehen ist, weiches in das Innengewinde 6 eingeschraubt ist.

Der Partikelsensor 1 weist ein Sensorelement 12 auf, welches in einen hülsenartigen Kopf 13 des Gassensors ragt. Zwischen dem Gehäusegewindeabschnitt 8 und dem hülsenartigen Kopf 13 besteht ein Einströmspalt, über den Abgas in den Gassensor 1 einströmen kann.

Der hülsenartige Kopf weist in Umfangsrichtung verteilt mehrere Durchgangsöffnungen 13a, 13b auf, über die in den Gassensor einströmendes Abgas in das Innere des hülsenartigen Kopfes gelangen kann. Von dort strömt das Abgas in Richtung zu einer Ausströmöffnung 11, die an einer Stirnseite des hülsenartigen Kopfes 13 vorgesehen ist. Über die Ausströmöffnung 11 strömt Abgas aus dem Gassensor 1 zurück in das Innere des Abgasrohrs 2.

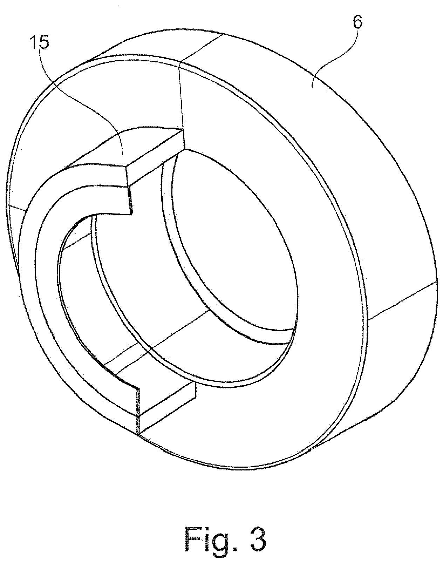

Wie aus Fig. 2a ersichtlich ist, ist in einem stromabwärtigen Bereich 14 des Gassensors ein Strömungsleitelement 15 angeordnet, das sich über einen stromabwärtigen Teilumfang des Gehäusegewindeabschnitts 8 erstreckt (vgl. Fig. 2b und Fig. 3).

Das Strömungsleitelement 15 ist dazu vorgesehen, einen Abgasstrom in dem Ringspalt und somit eine Umströmung des Partikelsensors an seinem Außenumfang bzw. in dem Ringspalt zu begrenzen oder weitgehend zu verhindern. Das Strömungsleitelement 15 ist hinsichtlich seiner Form mit einem "halben Fahrradschutzblech" vergleichbar, was am besten aus Fig. 3 ersichtlich ist.

Wie aus Fig. 2a ersichtlich ist, besteht zwischen dem Strömungsleitelement 15 und einem stromabwärtigen Teilumfang des Gehäusegewindeabschnitts 8 ein radialer Spalt 16.

Das Strömungsleitelement 15 weist (ähnlich wie bei einem Fahrradschutzblech) einen radial nach innen zu einer Mittellängsachse 17 (vgl. Fig. 1) des Gassensors 1 hin abstehenden Abschnitt 15a auf, welcher einen Teilumfang der Stirnseite des Gehäusegewindeabschnitts zumindest ein Stück weit überdeckt.

Wie aus den Fign. 2a, 2b und 3 ersichtlich ist, erstreckt sich das Strömungsleitelement hier über einen Umfang von 180° des Gassensors 1.

Zwischen dem radial nach innen abstehenden Abschnitt 15a des Strömungsleitelements und der Stirnseite des Gehäusegewindeabschnitts 8 besteht - in Richtung einer Mittellängsachse 17 (vgl. Fig. 1) des Gassensors 1 betrachtet - ein kleiner Abstand bzw. Spalt.

In der Abgasanlage kann ein Partikelfilter (nicht dargestellt) angeordnet sein. Der Gassensor 1 kann, in Strömungsrichtung des Abgases betrachtet, nach dem Partikelfilter angeordnet sein.

Die Funktion des Sensorelements 12 basiert vorzugsweise auf einer Widerstandsmessung. An dem Sensorelement 12 angelagerte Rußpartikel bilden elektrische Pfade zwischen Elektrodenkammern, über die ein Strom fließt. Das Sensorelement wird während des Betriebs der Abgasanlage regelmäßig durch Aufheizen regeneriert, wodurch angelagerte Rußpartikel verbrannt werden. Anhand des gemessenen Stroms bewertet die Diagnose die Funktionsfähigkeit des Rußpartikelfilters.

Im Unterschied zu der in Fig. 1a und 1b gezeigten Anordnung wird durch das Strömungsleitelement 15 eine Umströmung des Partikelsensors bzw. des Gehäusegewindeabschnitts 8 nahezu vollständig vermieden. Der in Fig. 1a dargestellte Spaltvolumenstrom m_{Spalt} wird also weitgehend oder nahezu vollständig unterbunden, was sich günstig auf das Spülgefälle und somit die Messqualität auswirkt.

## Patentansprüche

1. Abgasanlage, mit
- einem in einer Strömungsrichtung (4) von Abgas durchströmten Abgasrohr, welches eine Rohrwandung (2) aufweist,
- einem Flansch (5), der in der Rohrwandung (2) angeordnet ist und der eine mit einem Innengewinde (6) versehene Durchgangsöffnung aufweist,
- einem Gassensor, insbesondere einem Partikelsensor (1), der dazu vorgesehen ist, die Konzentration von in dem Abgas enthaltenen Rußpartikeln zu sensieren, und der einen mit einem Außengewinde versehenen Gehäusegewindeabschnitt (8) aufweist, welcher in die Durchgangsöffnung eingeschraubt ist, wobei
- zwischen einer radialen Außenseite des Gehäusegewindeabschnitts (8) und einem in das Innere des Abgasrohrs ragenden Innenumfangsabschnitt der Durchgangsöffnung ein Ringspalt (9) besteht, **dadurch gekennzeichnet, dass** der Flansch (5) ein Strömungsleitelement (15) aufweist, welches sich lediglich über einen stromabwärtigen Teilumfang des Gehäusegewindeabschnitts (8) erstreckt und welches dazu vorgesehen ist, eine Umströmung des Gassensors in dem Ringspalt (9) zu begrenzen oder weitgehend zu verhindern.

2. Abgasanlage nach Anspruch 1, **dadurch gekennzeichnet, dass** zwischen dem Strömungsleitelement (15) und dem stromabwärtigen Teilumfang des Gehäusegewindeabschnitts (8) ein Spalt besteht.

3. Abgasanlage nach Anspruch 1 oder 2, **dadurch gekennzeichnet, dass** sich das Strömungsleitelement (15) über einen Umfangsbereich von
- zwischen 150° und 210° oder
- zwischen 160° und 200° oder
- zwischen 170° und 190° oder
- über im Wesentlichen oder genau 180° erstreckt.

4. Abgasanlage nach einem der Ansprüche 1 bis 3, **dadurch gekennzeichnet, dass** das Strömungsleitelement (15) einen radial nach innen zu einer Mittellängsachse (17) des Gassensors (1) hin abstehenden Abschnitt (15a) aufweist, welcher einen Teilumfang einer Stirnseite des Gehäusegewindeabschnitts (8) zumindest ein Stück weit überdeckt.

5. Abgasanlage nach Anspruch 4, **dadurch gekennzeichnet, dass** zwischen dem radial nach innen abstehenden Abschnitt (15a) des Strömungsleitelements (15) und der Stirnseite des Gehäusegewindeabschnitts (8) - in Richtung einer Mittellängsachse (17) des Gassensors (1) betrachtet - ein Abstand besteht.

6. Abgasanlage nach einem der Ansprüche 1 bis 5, **dadurch gekennzeichnet, dass** der Flansch (5) in die Rohrwandung (2) eingeschweißt ist.

7. Abgasanlage nach einem der Ansprüche 1 bis 6, **dadurch gekennzeichnet, dass** ein Teilabschnitt des Gehäusegewindeabschnitts (8) über eine dem Innern des Abgasrohrs zugewandte Stirnseite des Flansches (5) vorsteht.

8. Abgasanlage nach einem der Ansprüche 1 bis 7, **dadurch gekennzeichnet, dass** ein hülsenartiger Kopf (13) des Gassensors (1) in Richtung seiner Mittellängsachse (17) über das Strömungsleitelement (15) in das Innere des Abgasrohrs hinein vorsteht.

9. Abgasanlage nach Anspruch 8, **dadurch gekennzeichnet, dass** der Gassensor (1) zwischen dem Gehäusegewindeabschnitt (8) und dem hülsenartigen Kopf (13) einen Einströmspalt (10) aufweist, über den Abgas in den Gassensor (1) einströmt.

10. Abgasanlage nach einem der Ansprüche 8 oder 9, **dadurch gekennzeichnet, dass** ein Sensorelement (12) des Gassensors (1) mittig in den hülsenartigen Kopf (13) ragt, wobei in den hülsenartigen Kopf (13) eintretendes Abgas an dem Sensorelement (12) entlang zu einer Stirnseite des hülsenartigen Kopfes (13) strömt.

11. Abgasanlage nach Anspruch 10, **dadurch gekennzeichnet, dass** der hülsenartige Kopf (13) an seiner Stirnseite eine Ausströmöffnung (11) aufweist, über die Abgas aus dem hülsenartigen Kopf (13) zurück in das Abgasrohr strömt.

12. Abgasanlage nach einem der Ansprüche 1 bis 11, **dadurch gekennzeichnet, dass** die Abgasanlage einen Partikelfilter aufweist, wobei der Gassensor (1) in Strömungsrichtung (4) des Abgases nach dem Partikelfilter angeordnet ist.

## Claims

1. An exhaust system, with
- an exhaust pipe through which exhaust flows in a direction of flow (4), which has a pipe wall (2),
- a flange (5), which is arranged in the pipe wall (2) and which has a through-opening provided with an internal thread (6),
- a gas sensor, especially a particle sensor (1), which is provided to sense the concentration of soot particles contained in the exhaust, and which has a housing thread portion (8) provided with an external thread, which portion is screwed into the through-opening, wherein
- an annular gap (9) exists between a radial outer side of the housing thread portion (8) and an inner peripheral portion of the through-opening which protrudes into the interior of the exhaust pipe, **characterised in that** the flange (5) has a flow guidance element (15) which extends merely over a downstream partial periphery of the housing thread portion (8) and which is provided to limit or largely to prevent an airflow around the gas sensor in the annular gap (9).

2. An exhaust system according to Claim 1, **characterised in that** there is a gap between the flow guidance element (15) and the downstream partial periphery of the housing thread portion (8).

3. An exhaust system according to Claim 1 or Claim 2, **characterised in that** the flow guidance element (15) extends over a peripheral region of
- between 150° and 210° or
- between 160° and 200° or
- between 170° and 190° or
- over substantially or exactly 180°.

4. An exhaust system according to one of Claims 1 to 3, **characterised in that** the flow guidance element (15) has a portion (15a) which projects radially inwards to a longitudinal central axis (17) of the gas sensor (1), which portion covers a partial periphery of an end face of the housing thread portion (8) at least for a little way.

5. An exhaust system according to Claim 4, **characterised in that** there is a spacing between the portion (15a) of the flow guidance element (15) which projects radially inwards and the end face of the housing thread portion (8) - viewed in the direction of a longitudinal central axis (17) of the gas sensor (1).

6. An exhaust system according to one of Claims 1 to 5, **characterised in that** the flange (5) is welded into the pipe wall (2).

7. An exhaust system according to one of Claims 1 to 6, **characterised in that** a partial portion of the housing thread portion (8) protrudes across an end face of the flange (5) which faces the interior of the exhaust pipe.

8. An exhaust system according to one of Claims 1 to 7, **characterised in that** a sleeve-like head (13) of the gas sensor (1) protrudes over the flow guidance element (15) into the interior of the exhaust pipe in the direction of its longitudinal central axis (17).

9. An exhaust system according to Claim 8, **characterised in that** the gas sensor (1) between the housing thread portion (8) and the sleeve-like head (13) has an inflow gap (10), via which exhaust flows into the gas sensor (1).

10. An exhaust system according to one of Claims 8 or 9, **characterised in that** a sensor element (12) of the gas sensor (1) projects centrally into the sleeve-like head (13), with exhaust entering the sleeve-like head (13) flowing along the sensor element (12) to an end face of the sleeve-like head (13).

11. An exhaust system according to Claim 10, **characterised in that** the sleeve-like head (13) has on its end face an outflow opening (11) via which exhaust flows out of the sleeve-like head (13) back into the exhaust pipe.

12. An exhaust system according to one of Claims 1 to 11, **characterised in that** the exhaust system has a particle filter, the gas sensor (1) being arranged after the particle filter in the direction of flow (4) of the exhaust gas.

## Revendications

1. Installation de gaz d'échappement comprenant :
- une tubulure de gaz d'échappement dans laquelle circulent des gaz d'échappement dans une direction de circulation (4) et qui comporte une paroi tubulaire (2),
- une bride (5) qui est située dans la paroi tubulaire (2) et qui comporte une ouverture de passage ayant un filetage interne (6),
- un capteur de gaz, en particulier un capteur de particules (1) qui est réalisé pour permettre de détecter la concentration des particules de noir de carbone contenues dans les gaz d'échappement, et qui comporte un segment de boîtier fileté (8) ayant un filetage externe qui est vissé dans l'ouverture de passage,
dans laquelle
- une fente annulaire (9) étant présente entre la face radiale externe du segment de boîtier fileté (8) et un segment de périphérie interne de l'ouverture de passage pénétrant à la partie interne de la tubulure de gaz d'échappement,
**caractérisée en ce que**
la bride (5) comporte un élément de guidage du flux (15) qui s'étend uniquement sur une partie de la périphérie aval du segment de boîtier fileté (8) et qui est prévu pour limiter ou empêcher largement la circulation autour du capteur de gaz dans la fente annulaire (9).

2. Installation de gaz d'échappement conforme à la revendication 1, **caractérisée en ce qu'**
une fente est présente entre l'élément de guidage du flux (15) et la partie de la périphérie aval du segment fileté (8).

3. Installation de gaz d'échappement conforme à la revendication 1 ou 2,
**caractérisée en ce que**
l'élément de guidage du flux (15) s'étend sur une plage périphérique comprise :
- entre 150° et 210°, ou
- entre 160° et 200°, ou
- entre 170° et 190°, ou
- essentiellement ou exactement égale à 180°.

4. Installation de gaz d'échappement conforme à l'une des revendications 1 à 3,
**caractérisée en ce que**
l'élément de guidage du flux (15) comporte un segment (15a) s'étendant radialement vers l'intérieur en direction de l'axe longitudinal médian (17) du capteur de gaz (1), et qui recouvre une partie de la périphérie de la face frontale du segment de boîtier fileté (8), au moins dans une certaine mesure.

5. Installation de gaz d'échappement conforme à la revendication 4,
**caractérisée par**
une distance entre le segment (15a) s'étendant radialement vers l'intérieur de l'élément de guidage du flux (15) et la face frontale du segment de boîtier fileté (8) considérée dans la direction de l'axe longitudinal médian (17) du capteur de gaz (1).

6. Installation de gaz d'échappement conforme à l'une des revendications 1 à 5,
**caractérisée en ce que**
la bride (5) est soudée sur la paroi tubulaire (2).

7. Installation de gaz d'échappement conforme à l'une des revendications 1 à 6,
**caractérisée en ce qu'**
un segment partiel du segment de boîtier fileté (8) dépasse de la face frontale de la bride (5) tournée vers l'intérieur de la tubulure de gaz d'échappement.

8. Installation de gaz d'échappement conforme à l'une des revendications 1 à 7,
**caractérisée en ce que**
la tête en forme de douille (13) du capteur de gaz (1) fait saillie à la partie interne de la tubulure de gaz d'échappement au-dessus de l'élément de guidage du flux (15) dans la direction de son axe longitudinal médian (17).

9. Installation de gaz d'échappement conforme à la revendication 8,
**caractérisée en ce que**
le capteur de gaz (1) comporte, entre le segment de boîtier fileté (8) et la tête en forme de douille (13) une fente d'admission (10) par laquelle les gaz d'échappement pénètrent dans le capteur de gaz (1).

10. Installation de gaz d'échappement conforme à l'une des revendications 8 et 9,
**caractérisée en ce qu'**
un élément (12) du capteur de gaz (1) pénètre en position médiane dans la tête en forme de douille (13), et les gaz d'échappement pénétrant dans la tête en forme de douille (13) circulent le long de l'élément de capteur (12) vers la face frontale de la tête en forme de douille (13).

11. Installation de gaz d'échappement conforme à la revendication 10,
**caractérisée en ce que**
la tête en forme de douille (13) comporte, sur sa face frontale une ouverture d'évacuation (11) par laquelle les gaz d'échappement sortant de la tête en forme de douille (13) retournent dans la tubulure de gaz d'échappement.

12. Installation de gaz d'échappement conforme à l'une des revendications 1 à 11,
**caractérisée en ce qu'**
elle comporte un filtre à particules, le capteur de gaz (1) étant monté à l'arrière du filtre à particules dans la direction de circulation (4) des gaz d'échappement.
